# EUROPEAN PATENT SPECIFICATION

(11) **EP 3 273 387 B1**
(45) Date of publication and mention of the grant of the patent: **15.05.2024**
(21) Application number: 16180143.6
(22) Date of filing: 19.07.2016
(51) Int. Cl.: G06V 10/40, G06F 18/213, G06V 10/776, G06V 10/82, G06V 10/44

(54) **MEDICAL IMAGE SEGMENTATION WITH A MULTI-TASK NEURAL NETWORK SYSTEM**
MEDIZINISCHE BILDSEGMENTIERUNG MIT EINEM NEURALEN NETZWERKSYSTEM MIT MEHREREN AUFGABEN
SEGMENTATION D'IMAGE MÉDICALE AVEC UN SYSTÈME DE RÉSEAU NEURONAL MULTITÂCHE

(43) Date of publication of application: 24.01.2018
(73) Proprietor: Siemens Healthineers AG, 91301 Forchheim (DE)
(72) Inventor: Kelm, Michael, 91052 Erlangen (DE); Pauly, Olivier, 81241 München (DE)
(74) Representative: Siemens Healthineers Patent Attorneys

(56) References cited:
- ZHUANG FUZHEN ET AL: "Representation Learning via Semi-Supervised Autoencoder for Multi-task Learning", 2013 IEEE 13TH INTERNATIONAL CONFERENCE ON DATA MINING, IEEE, 14 November 2015 (2015-11-14), pages 1141-1146, XP032843507, ISSN: 1550-4786, DOI: 10.1109/ICDM.2015.22 [retrieved on 2016-01-05]
- Antti Rasmus ET AL: "Lateral Connections in Denoising Autoencoders Support Supervised Learning", , 30 April 2015 (2015-04-30), XP055337285, Retrieved from the Internet: URL:https://arxiv.org/pdf/1504.08215v1.pdf
- Junbo Zhao ET AL: "STACKED WHAT-WHERE AUTO-ENCODERS", , 14 February 2016 (2016-02-14), XP055337287, Retrieved from the Internet: URL:https://arxiv.org/pdf/1506.02351v8.pdf [retrieved on 2017-01-20]
- TRUYEN TRAN ET AL: "Learning deep representation of multityped objects and tasks", ARXIV.ORG, CORNELL UNIVERSITY LIBRARY, 201 OLIN LIBRARY CORNELL UNIVERSITY ITHACA, NY 14853, 4 March 2016 (2016-03-04), XP080687169,
- HAWKINS S ET AL: "OUTLIER DETECTION USING REPLICATOR NEURAL NETWORKS", SECURITY IN COMMUNICATION NETWORKS : THIRD INTERNATIONAL CONFERENCE ; REVISED PAPERS / SCN 2002, AMALFI, ITALY, SEPTEMBER 11 - 13, 2002; [LECTURE NOTES IN COMPUTER SCIENCE , ISSN 0302-9743], SPRINGER VERLAG, DE, vol. 2454, 4 September 2002 (2002-09-04), pages 170-180, XP009072657, ISBN: 978-3-540-24128-7
- XIA YAN ET AL: "Learning Discriminative Reconstructions for Unsupervised Outlier Removal", 2015 IEEE INTERNATIONAL CONFERENCE ON COMPUTER VISION (ICCV), IEEE, 7 December 2015 (2015-12-07), pages 1511-1519, XP032866499, DOI: 10.1109/ICCV.2015.177 [retrieved on 2016-02-17]
- Arno Candel ET AL: "Deep Learning with H2O", , 1 February 2015 (2015-02-01), XP055337289, Retrieved from the Internet: URL:https://raw.githubusercontent.com/h2oa i/h2o/master/docs/deeplearning/DeepLearnin gBookletV1.pdf [retrieved on 2017-01-20]

## Description

The present invention refers to machine vision and in particular relates to deep neural networks for the detection and segmentation of organs, anatomical structures, lesions, masses and other pathologies that are traditionally handled by CAD (Computer Aided Diagnosis).

In the field of machine vision, based on deep learning, e.g. deep neural networks or deep convolutional neural networks, and massive training sets such as ImageNet a lot of attention was gathered and attracted a lot of investment. Indeed, they are reaching now so-called superhuman performances for tasks such as natural image classification. Such technology could also be applied to the medical image analysis field as mentioned above, for example for the detection and segmentation of organs in medical images. While tremendous improvements can be expected by using deep learning technologies in the medical field, two major challenges still need to be addressed to make its translation to clinical applications possible: generalization power and prediction confidence of deep neural networks.

First, there is still an unmet need of massive annotated datasets in the medical context, e.g. imaging volumes associated to manual annotations (e.g. segmentations). Indeed, annotating medical images is a very tedious and time consuming task.

Thus, the training of such deep learning models is very difficult and does not attain the generalization performance that would be required for real clinical applications.

Second, while deep neural networks have shown state of the art performance in many applications, they are still seen as black box predictors. Indeed, interpreting the cascade of non-linear transformations applied to the input data by such a network is challenging and remains an area of research in itself. For this reason, it is difficult to assess the confidence of prediction of a trained deep neural network. In the context of object detection or segmentation, there is still a lack of built-in confidence mechanisms. Being able to assess confidence at prediction time is crucial as it would permit to re-weight or correct predictions according to the confidence value or at least to provide an indication to the user whether the prediction should be trusted or not.

In the field of medical image analysis, deep learning technologies have been applied to many different applications and demonstrated state-of-the-art results. In contrast to other learning-based approaches that rely on hand-crafted features, deep learning provides an end-to-end learning solution. Indeed, task-specific features are learned directly from the data, which makes neural networks very attractive. This explains their application in many medical image analysis tasks over the last years, such as breast lesion segmentation, vertebrae localization, detection of the aortic valve, glaucoma detection, cell detection, pancreas segmentation in CT images, or 3D anatomical landmark detection.

The first basic approach to ensure generalization of deep neural networks is to use a training set as well as a cross-validation set (as result) to permit early stopping of the optimization and avoid thereby over-fitting. In the context of limited training sets, more advanced strategies are required to ensure good generalization. Based on so-called pre-training, strategies have been explored to provide a good initialization of the deep net parameters. They can be divided into 3 categories: (i) layer-wise unsupervised pre-training, (ii) adaptation of a publicly available network pre-trained on natural images, (iii) perform training without any pre-training but using data augmentation.

In the context of unsupervised pre-training it is known in state of the art systems to train the deep neural network layer-by-layer using an unsupervised strategy. Starting from the visible layer towards the top hidden layer, the optimization is driven at each stage by aiming at reconstructing the input, in an auto-encoder fashion.

By training directly on a small dataset, e.g. in the magnitude of several hundreds of patient data, there is a significant risk of overfitting which makes the use of an approach, like training a neural network without pre-training in a real clinical setting difficult. To prevent from overfitting, so-called data augmentation can be performed to synthetically increase the size of the training set by using arbitrary transformations of the original data, e.g. rotations, scaling and mirroring of the images. This is used for instance in the context of glaucoma detection.

In all state of the art systems, mentioned above, training has been mostly conducted using an objective function based on a single task, i.e. either classification or regression. Concerning the prediction, it mostly relies on the activation function at the top layer which is either a sigmoid, softmax or linear layer. While these activation functions provide continuous values, they do not convey any information on the confidence of prediction. As network responses are often very strong due to the nature of these non-linear activation functions, machine learning researchers use smoothing of the prediction to emulate confidence and get rid of false positives.

Moreover, it was shown that deep neural networks can be easily fooled by random images. Experiments clearly show the difficulty of assessing the generalization power of a deep neural network as well as the lack of built-in confidence for deep neural networks.

The document Zhuang Fuzhen et al.: "Representation Learning via Sem-Supervised Autoencoder for Multi-task Learning", IEEE 13^{th} International Conference on Data Mining (2013) proposes a feature representation learning framework, which has the ability by combining autoencoders, which can effectively learn a good representation by using large amount of unlabeled data, and model parameter regularization methods into a unified model for multi-task learning.

The document Antti Rasmus et al.: "Lateral Connections in Denoising Autoencoders Support Supervised Learning", https://.org//..pdf (2015) describes how a deep denoising autoencoder with lateral connections can be used as an auxiliary unsupervised learning task to support supervised learning.

The document Junbo Zhao et al.: "Stacked What-Where AutoEncoders", https://.org//..pdf describes the novel architecture of stacked what-where autoencoders, which integrates discriminative and generative pathways and provides a unified approach to supervised, semi-supervised and unsupervised learning without relying on sampling during training.

The document Truyen Tran et al.: "Learning deep representation of multityped objects and tasks", https://.org//..pdf introduces introduce a deep multitask architecture to integrate multityped representations of multimodal objects.

The document Simon Hawkings et al.: "Outlier Detection Using Replicator Neural Networks", Lecture Notes in Computer Science, 2454, pp. 170-180 (2012) considers the problem of finding outliers in large multivariate databases by using replicator neural networks (autoencoders) to provide a measure of the outlyingness of data records.

The document Xia Yan et al.: "Learning Discriminative Reconstructions for Unsupervised Outlier Removal", IEEE International Conference on Computer Vision, pp. 1511-1519 studies the problem of automatically removing outliers from noisy data by utilizing the reconstruction errors of an autoencoder.

The document Arno Candel et al.: "Deep Learning with H2O", https://.githubusercontent.com/oai/o////.pdf describes H2O, which is a fast scalable open source machine learning and deep learning framework.

Based on the above mentioned drawbacks of state of the art neural network systems and their application in medicine, where generally, only a smaller training dataset may be provided, it is an object of the present invention to provide a solution for a deep neural network with a good generalization power and an in-built prediction confidence.

This object is solved by the features of the accompanying independent claims, in particular of a method, which may be implemented as a computer program, and a system.

According to a first aspect, the present invention refers to a method, implemented by one or more computing devices, for machine vision and in particular for parsing a medical image.

The image parsing may refer to a segmentation task or to a detection task. Segmentation is a task for labeling the image voxels in order to learn, where the object (organ or cancerous structure) has to be delineated. Detection aims at predicting the coordinates of an object (e.g. where to find an organ within an image). The method comprises the features of claim 1.

In the following the features and terms, used in this application are defined in more detail below.

The method is computer-implemented. It may be executed on different digital machines or computers or computer networks. The computer, which will be used for executing the method of the invention includes one or more hardware processors, where each action of the method is performed by the one or more hardware processors.

Medical image detection may refer to medical images from different modalities like CT, Tomosynthesis, MRT, PET and others. In DBT (Digital Breast Tomosynthesis), for example, a digital image capture of the breast is combined with processing with simple tube/detector motion as used in conventional computed tomography (CT). In CT, the source/detector makes at least a complete 180-degree rotation about the subject obtaining a complete set of data from which images may be reconstructed. Digital tomosynthesis, on the other hand, only uses a limited rotation angle (e.g., 15-60 degrees) with a lower number of discrete exposures (e.g., 7-51) than CT. This incomplete set of projections is digitally processed to yield images similar to conventional tomography with a limited depth of field. Because the image processing is digital, a series of slices at different depths and with different thicknesses can be reconstructed from the same acquisition. Depending on the respective medical question it is required to detect structures, objects or sub-images in the medical images, like organs or cancerous structures. This object should be solved automatically also for new unseen images.

In medical image processing the validation of annotated training datasets is a very time consuming challenging task. Therefore, only few validated training datasets exist.

Image features are defined as a set of parameters that characterize different local properties of the image. The parameters may comprise: intensity values, gradient magnitude and orientation computed as different scales, Laplacian or Gaussian functions, computed at different scales, Canny edges, local intensity statistics, such as intensity mean, median, main mode, or textual descriptors, such as local binary patterns or haar-like features or other digital image features used in object recognition. As these types of properties characterize salient structures within medical images, they are usually used as hand-crafted features for the detection of objects. In a preferred embodiment, direct intensity values of the patch/subvolume centered on the voxel of interest, to characterize the visual context, may be used.

The neural network is a deep neural multi-task network. A deep network is a neural network that uses deep learning strategies. It refers to artificial neural networks that are composed of many layers. "Normal" neural networks usually have one to two hidden layers and are used for supervised prediction or classification. Deep learning neural network architectures differ from "normal" neural networks, because they have more hidden layers and because they can be trained in an unsupervised and a supervised manner for different learning tasks. According to a preferred embodiment of the present invention, the neural network is trained in a supervised manner. This refers to the fact that the training dataset includes the desired output (e.g. an annotated image).

The network may be a convolutional neural network (CNN). CNN are one of the most popular architectures used in computer vision problems because of their reduced number of parameters compared to fully connected models and intuitive structure, which allows the network to learn translation invariant features. In addition, convolution is a "cheap" operation that can be computed efficiently.

A multi-task network is a network using Multi-task learning (MTL). MTL is an approach in machine learning that refers to the joint training of multiple problems, enforcing a common intermediate parameterization or representation. If the different problems are sufficiently related, MTL can lead to better generalization and benefit all of the tasks. This often leads to a better model for the main task, because it allows the learner to use the commonality among the tasks. Therefore, multi-task learning is a kind of inductive transfer. This type of machine learning is an approach to inductive transfer that improves generalization by using the domain information contained in the training datasets of related tasks as an inductive bias. It does this by learning tasks in parallel while using a shared representation; what is learned for each task can help other tasks be learned better. The goal of MTL is to improve the performance of learning algorithms by learning classifiers for multiple tasks jointly. Multi-task learning works, because encouraging a classifier (or a modification thereof) to also perform well on a slightly different task is a better regularization than uninformed regularizers (e.g. to enforce that all weights are small).

The main task may be defined as classification task. For example, for image detection it may be required to classify the pixels in foreground and background or to classify the pixels belonging to a structure represented in the image or not. The main task may also be defined as a regression task where a voxel is associated to its distance to the centroid of an organ of an anatomical structure to be detected or segmented. An adjuvant task may be tasks that characterize different local properties of the image. Concerning the adjuvant tasks, their role is twofold: (i) they permit to regularize the training of the network; (ii) they can be used as by-product at prediction time for assessing confidence. For this reason, in a preferred embodiment of the invention, the adjuvant targets may be defined in a manner that they may ideally be extracted automatically or very easy to collect, so that their ground truth values are also available at prediction time. It is possible, that adjuvant targets can be either used alone or combined together.

The confidence estimation is a reliable and practical measure to predict confidence of the network, which is essential. It may be provided as a discrete or continuous value for the quality of the neural network prediction.

Multi-tasks prediction refers to calculating a prediction of an output, based on the defined tasks, including main task and adjuvant tasks.

Once trained, the multi-task network can be applied to new unseen images to provide predictions for the main and adjuvant tasks. Confidence can be estimated by using the predictions from the adjuvant tasks and the pre-computed features extracted from the input image.

According to the present invention the network is trained with a medical training dataset with a set of images with annotations to find the best network parameters according to an objective function by applying back propagation and stochastic gradient descent to find the optimal network weights and parameters.

In another preferred embodiment of the present invention the main task is a classification or a regression task. A classification task may, for example, refer to the task to decide whether a voxel is labeled as foreground or background. A regression task may refer to associate a voxel to its distance to the centroid or to the boundary of an organ of anatomical structure, to be detected or segmented.

According to another preferred embodiment of the present invention, the adjuvant task is a task for reconstruction of the image features that can be automatically computed (i.e. learned from the network) from the image after projection on its low-dimensional representation. After training, the deep neural network permits to transform the raw image input into a usually lower-dimensional representation which is defined by the activation of the neurons at the top hidden layer. This may be for instance the N-1-layer, considering the N-th layer as the top layer modelling the classification or regression task. The image feature may refer to different image properties, comprising intensity values, gradient magnitude and/or orientation, local image curvature, local image statistical parameters.

Therefore, in a special preferred embodiment the network may be initialized in that the adjuvant task refers to automatically derive intensity values of the images as the medical training dataset and, in particular, breast density values for digital breast tomosynthesis images. However, the invention is not restricted to be applied for DBT-images.

According to an embodiment not forming part of the present invention, the adjuvant tasks are optimized simultaneously in order to regularize the training of the network, increasing thereby the generalization power and preventing overfitting. According to the present invention, the trained network (i.e. the network in the status, in which the training phase is finished) is provided with an (unseen, new) image as input and wherein the network provides an output at prediction time, wherein the last layer of the trained network is a hybrid layer designed to address both the main task and adjuvant task, the output comprising:
(i) An estimate of class labels according to the main detection or segmentation task, and
(ii) Reconstructed image features that can be automatically computed from the image after projection on its low-dimensional representation and which are used to automatically derive a confidence estimate at prediction time.

According to another preferred embodiment of the present invention, the derived confidence estimation is used to correct the prediction. With this feature the error probability may be reduced. It is also possible, to provide the estimated confidence value on an output interface to be provided for a user. According to the present invention, the confidence is estimated by comparing the reconstructed image features, which have been reconstructed/predicted by the network trained in a multi-task setting using the pre-determined image features, in particular, where the image features are the raw intensities of the input image.

In another preferred embodiment of the present invention, the calculation of the main and the adjuvant tasks may be controlled. In particular, the compromise between solving the main and the adjuvant task can be tuned by the changing the values of the weights of the linear combination.

To take into account the main as well as the adjuvant tasks, a special objective function needs to be defined. In its most simple embodiment, the multi-task objective function is defined as the linear combination of task-specific terms. Considering the example of input reconstruction as adjuvant task, such an objective function is defined as the linear combination of the mean squared error computed from the comparison of the predicted main target with the ground truth main target and the mean squared error computed from the comparison of the input data with the reconstructed data.

All or selected method steps may be executed by means of a computer program. The computer program may be stored on a tangible storage medium.

According to another aspect the present invention refers to a system for machine vision and in particular for detecting or segmenting structures in a medical image according to claim 6.

According to another aspect the present invention refers to a computer program according to claim 8.

### SHORT DESCRIPTION OF THE DRAWINGS

FIG. 1 is a schematic drawing of a multi-task learning pipeline with one adjuvant task of input reconstruction according to a preferred embodiment of the present invention.
FIG.2 is another schematic and exemplary drawing of a supervised multi-task training with adjuvant task of input reconstruction according to a preferred embodiment of the present invention.
FIG.3 is another schematic and exemplary drawing of confidence estimation using input reconstruction prediction according to a preferred embodiment of the present invention.
FIG.4 is a block diagram of a neural network prediction system according to a preferred embodiment of the present invention.
FIG.5 is a block diagram of a neural network prediction system according to another preferred embodiment of the present invention.
FIG.6 is a flow chart for a neural network prediction method according to a preferred embodiment of the present invention.

### DETAILED DESCRIPTION

The present invention provides a convolutional deep neural network system which ensures good generalization power and automatically estimates prediction confidence, which makes it possible to apply these systems in medical applications, where it is necessary to provide reliable results.

To address both the challenge of generalization and confidence, a multi-task learning strategy is provided, where a deep neural network is simultaneously trained on multiple tasks (at least 2), one being the main task or task of interest, e.g. classification or regression task, and the others being "adjuvant" tasks that act as regularization during the training phase and support confidence estimation during the prediction phase. By preventing the inner abstract representation of a deep neural network from becoming highly task-specific, regularization helps increasing generalization power and avoiding over-fitting. By using sound adjuvant task such as reconstruction of the input data, it becomes possible to use this by-product network output to assess the confidence of prediction.

Indeed, at prediction time, the network provides prediction for both the main target of interest as well as the adjuvant targets. In the case of input reconstruction, the predicted reconstruction value can be compared with the real input to determine the confidence of the system. Indeed, if the reconstructed value is similar to the real input value, then we can assume that the system recognizes well the current visual context. However, if the reconstructed value is different from the input, it suggests that the network is not expecting this visual context. This can be turned into a measure of confidence that can be used to correct the predicted target and that can be provided to the user.

### Defining main and adjuvant tasks

In the context of image parsing or image analyses, like detection or segmentation, the main task is often defined as a classification task where for instance a voxel is labeled as foreground or background. It can also be defined as a regression task where a voxel is associated to its distance to the centroid or to the boundary of an organ of anatomical structure to detect/segment. Concerning the adjuvant tasks, their role is twofold:
(i) they permit to regularize the training of the network;
(ii) they can be used as by-product at prediction time for assessing confidence.

For this reason, adjuvant targets should be ideally extracted automatically or very easy to collect, so that their ground truth values are also available at prediction time. In the following, several possible examples for adjuvant targets that can be either used alone or in combination are given.

In a possible embodiment, we propose to extract adjuvant targets that characterize different local properties of the image: intensity values, gradient magnitude and orientation computed as different scales, Laplacian or Gaussians computed at different scales, Canny edges, local intensity statistics such as intensity mean, median, main mode, or textual descriptors such as local binary patterns or haar-like features. As these types of properties characterize salient structures within medical images, they are usually used as hand-crafted features for the detection of objects. In a preferred embodiment, we will use the direct intensity values of the patch/subvolume centered on the voxel of interest, to characterize the visual context. In another embodiment, we propose to extract some physical (global or local) properties of the image and to use them as adjuvant targets. In the context of digital breast tomosynthesis (DBT), one very interesting adjuvant target is the breast density which can be automatically derived from the image. Breast density can be defined as a continuous value (derived based on imaging physics), or as BI-RADS categories "mostly fatty", "scattered density", "consistent density", "extremely dense". Research shows that dense breasts have much higher probability to develop cancer and that tumors are much more difficult to detect within DBT/mammogram.

### Multi-task learning pipeline

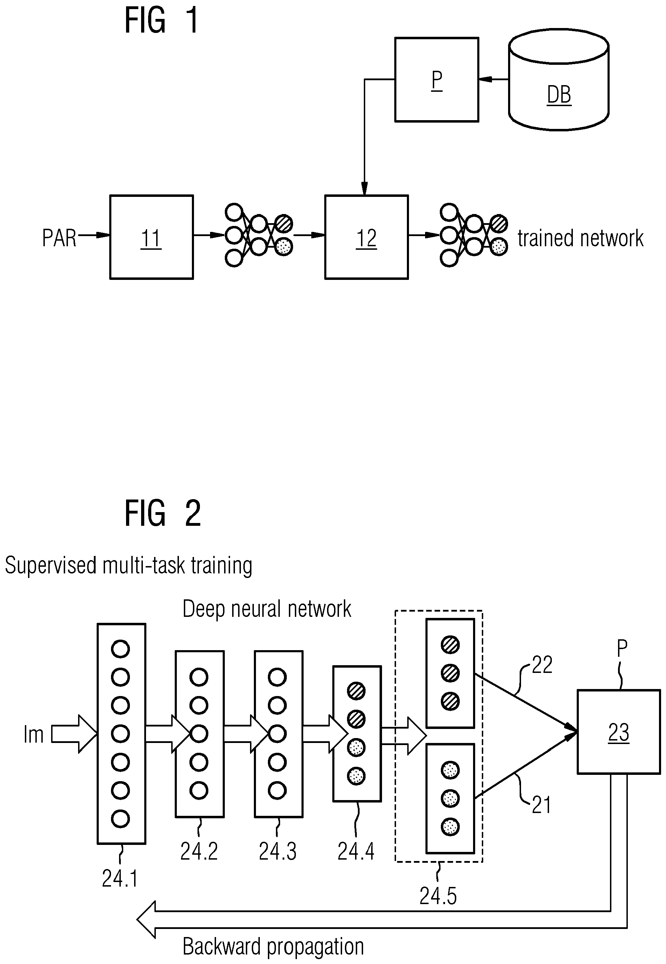

As shown in **Fig. 1****,** the multi-task learning pipeline consists of three different phases:
1. multi-task data preparation
2. network initialization and
3. supervised multitask training or learning.

As shown in Fig. 1, the network parameters PAR are inputted for the purpose of network initialization, which is depicted in Fig. 1 with reference numeral 11. The neuron, shown in Fig. 1 as hatched circle represents the hidden neurons addressing the prediction for the task of interest or the main task, whereas the dotted circle represents the hidden neurons addressing the prediction for the reconstruction task or adjuvant task. The supervised multi-task learning is represented in box 12, which results in a trained network. A database DB is constructed to store and provide medical images and target values, for example annotations, like organ segmentations. A processor P is adapted prepare the multi-task data for the purpose of training the network.

### Multi-task data generation

Using a dataset of medical images (can be 2D or 3D) associated to targets of interest, e.g. annotations, a multi-task dataset is created by concatenating those targets with the input raw data. For instance, if we consider the task of voxel classification into a background or foreground class, each training patch/subvolume around a voxel of interest will be associated to a class label, as well as the original intensity value of the considered voxel, or to all intensity values of the voxels within the patch/sub-volume (in a multivariate reconstruction setting).

### Network initialization

Given some parameters defining the architecture of a deep neural network, e.g. number of layers, type of layers, number of filters / neurons per layer, a network is created and its weights are initialized randomly. Note that the last layer is a hybrid layer designed to address both the task of interest (main task) and the task that aims at reconstructing the input data (e.g. image features).

### Supervised multi-task learning or training

Given the training set consisting of the multi-task dataset, the initialized network can be trained in a supervised fashion by using for instance back-propagation and stochastic gradient descent or any other methods to find the best network parameters according to an objective function (see Fig. 2).

**Fig. 2** represents the supervised multi-task training with adjuvant tasks of input or image feature reconstruction. On the left hand side of Fig.2 the medical images Im are fed in the deep neural network, which is represented in the middle of Fig. 2. The hatched circles represent hidden neurons addressing the prediction for the task of interest and the dotted circles represent hidden neurons addressing the prediction for the reconstruction task(s). Reference numeral 21 represents the reconstruction targets, i.e. the reconstructed image features, whereas reference numeral 22 represents the targets of interest. Both of them, the main and the adjuvant tasks are fed to a multi-task error computation 23, which may be executed in a processor P. The result of the multi-task error computation 23 is propagated backwards to the network again, as shown in Fig.2.

To take into account the main as well as the adjuvant tasks, a special objective function needs to be defined. In its most simple embodiment, the multi-task objective function can be defined as the linear combination of task-specific terms. Considering the example of input reconstruction as adjuvant task, such an objective function can be defined as the linear combination of the mean squared error computed from the comparison of the predicted main target with the ground truth main target and the mean squared error computed from the comparison of the input data with the reconstructed data.

The compromise between solving the main and the adjuvant task can be tuned by the changing the values of the weights of the linear combination. More elaborated objective functions can be defined depending whether the task of interest is a classification or regression task. As mentioned earlier, these additional objectives permit to regularize the optimization, as they constrain the network to learn a low-dimensional representation which is not highly specialized for the main task but also for the adjuvant tasks. For instance, in the case of input reconstruction, the deep neural network is constrained to learn an implicit representation of the visual context manifold.

Once the training of the network is finished, the resulting multi-task network can be used to perform prediction. Given a new unseen image, the network simultaneously provides a prediction for the main target as well as for the adjuvant targets.

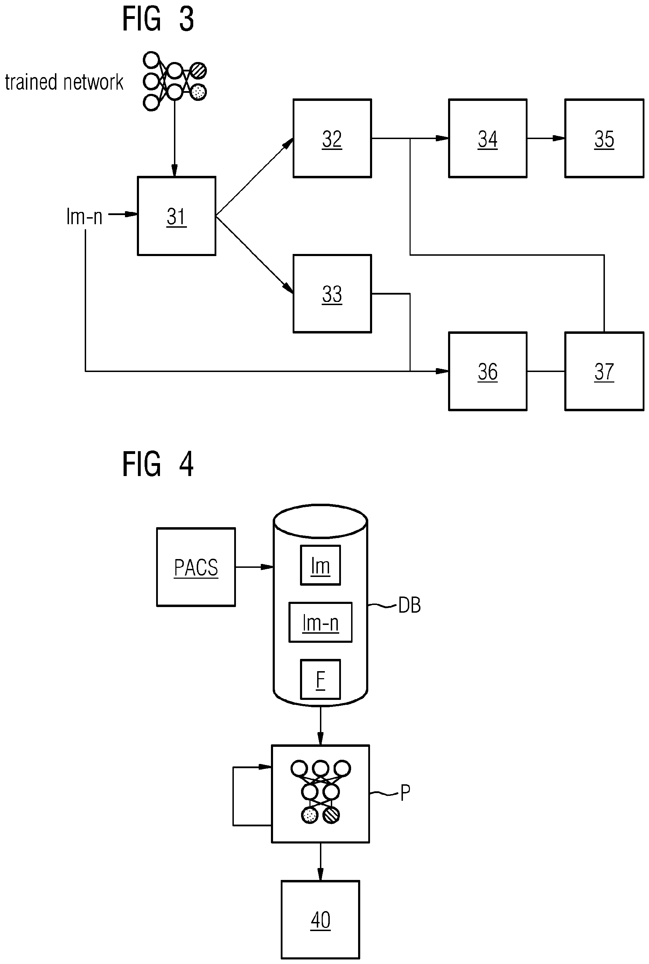

An example is shown in Fig. 3, where the predicted main target can be for instance the estimated class label for a voxel and the predicted adjuvant target the reconstruction of the input. If the ground truth of the adjuvant target is available at test time or can be automatically and reliably computed at test time, it is possible to compare their predicted and ground truth values. For instance, based on the real input data and on the predicted reconstruction provided by the network, it is possible to assess how well the current visual context can be projected onto the implicit low-dimensional representation of the network and reconstructed. The distance between the reconstruction and the input raw data can be plugged into a (multivariate) Gaussian kernel to compute a confidence estimate of the network on the current sample. Finally, this confidence estimate can be used either to correct the target prediction or as additional information provided to the user.

**Fig. 3** shows by way of example a confidence estimation using input reconstruction prediction according to a preferred embodiment of the present invention. New, unseen images, i.e. those without annotations and which have not been used in the trainings phase serve as input to the multi-task prediction, which is represented in Fig. 3 with reference numeral 31 and which interacts with the trained network. An output of the multi-task prediction 31 are:
1. a predicted target 32 and
2. a predicted reconstruction 33.

The predicted target 32 is forwarded to a prediction correction module 34 for providing a corrected target 35. The predicted reconstruction 33 is forwarded to a confidence estimator 36 which is constructed to calculate and provide a confidence estimation 37.

**Fig. 4** shows a block diagram for a multi-task neural network system using a deep learning approach. Medical data may be provided from a PACS system (Picture Archiving and Communication System) and may be stored in a database DB. The database DB may store the images IM and the extracted features F. The database DB is in data connection with a computing entity, comprising a processor P or a processing network for executing the neural network. An output interface 40 serves for providing the predictions and a confidence estimation.

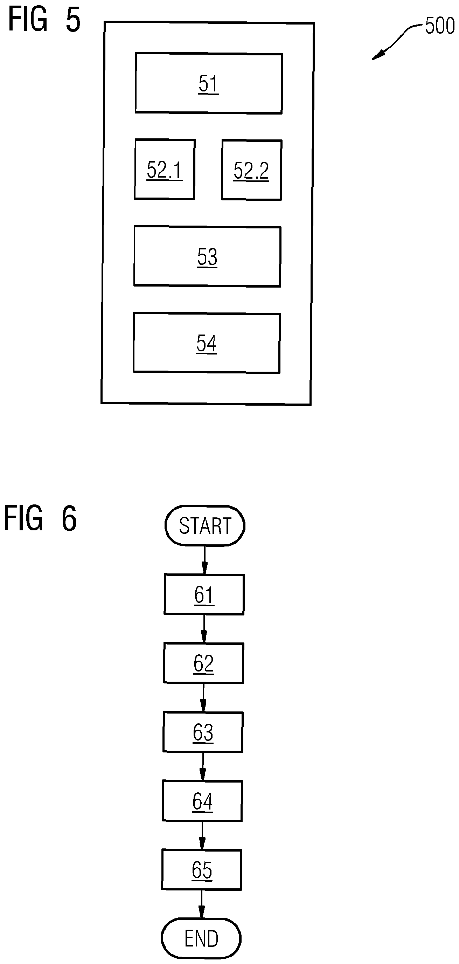

**Fig. 5** shows a block diagram of a deep learning system 500 according to the invention. The system 500 is adapted to provide a prediction of the main task and a prediction of the adjuvant tasks and a confidence estimation. The system 500 comprises a processor 51 for data processing a memory 52 for storing data, in particular for storing the image features F and the predictions. The system 500 further consists of a definition module 53 which is adapted to define the main and the adjuvant tasks. A multi-task learning pipeline 54 is adapted to train the network by simultaneously training the deep neural multi-task network on main and adjuvant tasks in a supervised manner, wherein the adjuvant tasks act as regularization of the network during a training phase (which is handled by a regularizer 55) and wherein the adjuvant tasks are used for deriving an in-build, automatic confidence estimation during a prediction phase, which will be calculated and provided by an estimator 56.

**Fig. 6** is a flow chart of a method for training and testing a neural network according to a preferred embodiment of the present invention. After starting the method, in step 61 a neural network is provided. In step 62, a so-called training set, i.e. a set of images with corresponding annotations or labels are provided. In step 63 image features derived from these images are pre-determined/pre-computed. In step 64 the main and the adjuvant tasks are defined. In step 65 the multi-task learning pipeline is applied in order to train the network by simultaneously training the deep neural multi-task network on main and adjuvant tasks in a supervised manner, wherein the adjuvant tasks, act as regularization of the network during a training phase and are used for deriving an in-build, automatic confidence estimation during a prediction phase.

In sum the invention refers to a method and system with an approach for using a multi-task deep learning pipeline to ensure good generalization and to estimate prediction confidence at test time. The proposed deep neural network approach is designed to learn simultaneously a mapping between the input data to the main target of interest as well as the mapping to adjuvant targets such as input reconstruction. During training, these adjuvant tasks permit to regularize the optimization and prevent from learning a highly task-specific inner representation. At test time, multi-task network provides prediction for the main target as well as by-product outputs that can be used for confidence estimation. In a preferred embodiment, an adjuvant target would be the reconstruction of the input raw data after projection on its low-dimensional representation. By comparing the real input with the reconstructed input, we are able to derive a confidence measure that can be provided to the user and used to correct the prediction.

In the drawings and the specification, there have been disclosed exemplary embodiments of the invention. However, many variations and modifications can be made to these embodiments without substantially departing from the scope of the present invention. Accordingly, although specific terms are employed, they are used in a generic and descriptive sense only and not for purposes of limitation. Thus, it is possible to apply the deep learning neural network not only for DBT images, but also to any other kind of medical images from other modalities.

The invention is not limited to the examples of embodiments described above and shown in the drawings, but may be freely varied within the scope of the appended claims

## Claims

1. Method for machine vision and in particular for parsing a medical image, comprising the steps of:
- Providing (61) a network, being a multi-task deep neural network
- Providing (62) the image to be parsed
- Pre-determining (63) image features derived from the image
- Defining (64)
- a main task for image parsing and
- an adjuvant task for reconstruction of the image features
- Training the network by simultaneously learning the deep neural multi-task network on main and adjuvant tasks in a supervised manner, wherein the network is trained with a medical training dataset with a set of images with annotations to find the optimal network weights and parameters according to an objective function by applying back propagation and stochastic gradient descent, wherein the adjuvant task acts as regularization of the network by using a multi-task objective function being a linear combination of task-specific terms, and
- performing multi-tasks prediction, wherein the trained network is provided with the image as input and wherein the network provides an output at prediction time, wherein the last layer of the trained network is a hybrid layer designed to address both the main task and adjuvant task,
the output comprising: (i) an estimate of class labels according to the main task, and (ii) reconstructed image features that can be automatically computed from the image after projection on its low-dimensional representation and which are used to automatically derive a confidence estimate,
wherein confidence is estimated by comparing the reconstructed image features, which have been reconstructed by the network, with the pre-determined image features.

2. Method according to claim 1, wherein the main task is a classification or a regression task.

3. Method according to any of the preceding claims, wherein the image features comprise intensity values, gradient magnitude and/or orientation, local image curvature, local image statistical parameters.

4. Method according to any of the preceding claims, wherein the adjuvant task comprises to automatically derive intensity values of the images as the medical training dataset and in particular breast density values for digital breast tomosynthesis images.

5. Method according to any of the preceding claims, wherein the compromise between solving the main task and the adjuvant task is tuneable by the changing the values of parameters of a multi-task objective function, wherein the multi-task objective function is a linear combination of task-specific terms, and wherein the parameters of the multi-task objective function are the weights of the linear combination.

6. System (500) for machine vision and in particular for parsing a medical image, comprising:
- a processing unit (51) for training and testing a neural network, being a multi-task deep neural network
- a storage (52) for storing an image to be parsed and for storing pre-determined image features, which are derived from the image
- a definition module (53), which is adapted to define
- a main task for image parsing and
- an adjuvant task for reconstruction of the image features
wherein the system (500) is adapted to train the network by simultaneously learning the deep neural multi-task network on main and adjuvant tasks in a supervised manner, wherein the network is trained with a medical training dataset with a set of images with annotations to find the optimal network weights and parameters according to an objective function by applying back propagation and stochastic gradient descent, wherein the adjuvant task acts as regularization of the network during a training phase by using a multi-task objective function being a linear combination of task-specific terms, and
and wherein the system (500) is adapted to perform multi-tasks prediction, wherein the trained network is provided with the image as input and wherein the network provides an output at prediction time, wherein the last layer of the trained network is a hybrid layer designed to address both the main task and adjuvant task,
the output comprising: (i) an estimate of class labels according to the main task, and (ii) reconstructed image features that can be automatically computed from the image after projection on its low-dimensional representation and which are used to automatically derive a confidence estimate,
wherein confidence is estimated by comparing the reconstructed image features, which have been reconstructed by the network, with the pre-determined image features.

7. System (500) according to the directly preceding system claim, wherein the system comprises:
- a training storage for storing a medical training dataset with a set of images with annotations for training and testing the network.

8. Computer program product comprising instructions which, when the program is executed by a computer, cause the computer to carry out the method according to one of the claims 1 to 5.

## Patentansprüche

1. Verfahren zum maschinellen Sehen und insbesondere zum Analysieren eines medizinischen Bildes, umfassend die folgenden Schritte:
- Bereitstellen (61) eines Netzwerks, bei dem es sich um ein tiefes neuronales Netzwerk mit mehreren Aufgaben handelt,
- Bereitstellen (62) des zu analysierenden Bildes,
- Vorbestimmen (63) der von dem Bild abgeleiteter Bildmerkmale,
- Definieren (64)
- einer Hauptaufgabe für das Analysieren von Bildern, und
- einer Hilfsaufgabe zur Rekonstruktion der Bildmerkmale,
- Trainieren des Netzwerks durch gleichzeitiges Lernen des tiefen neuronalen Netzwerks mit mehreren Aufgaben mittels Haupt- und Hilfsaufgaben auf überwachte Weise, wobei das Netzwerk mit einem medizinischen Trainingsdatensatz mit einem Satz von Bildern mit Annotationen trainiert wird, um die optimalen Netzwerkgewichtungen und Parameter gemäß einer Zielfunktion durch Anwendung von Rückwärtsverbreitung und stochastischem Gradientenabstieg zu ermitteln, wobei die Hilfsaufgabe als Regularisierung des Netzwerks fungiert, indem eine Zielfunktion mit mehreren Aufgaben verwendet wird, die eine Linearkombination aufgabenspezifischer Terme ist, und
- Durchführen einer Vorhersage mehrerer Aufgaben, wobei dem trainierten Netzwerk das Bild als Eingabe bereitgestellt wird und wobei das Netzwerk zum Vorhersagezeitpunkt eine Ausgabe bereitstellt, wobei die letzte Schicht des trainierten Netzwerks eine Hybridschicht ist, die sowohl die Hauptaufgabe als auch die Hilfsaufgabe adressiert,
wobei die Ausgabe umfasst: (i) eine Schätzung der Klassenmarkierungen gemäß der Hauptaufgabe, und (ii) rekonstruierte Bildmerkmale, die automatisch von dem Bild nach der Projektion auf seine niedrigdimensionale Darstellung berechnet werden können und zur automatischen Ableitung einer Konfidenzschätzung verwendet werden,
wobei die Konfidenz geschätzt wird, indem die rekonstruierten Bildmerkmale, die vom Netzwerk rekonstruiert wurden, mit den vorgegebenen Bildmerkmalen verglichen werden.

2. Verfahren nach Anspruch 1, wobei die Hauptaufgabe eine Klassifizierungs- oder eine Regressionsaufgabe ist.

3. Verfahren nach einem der vorhergehenden Ansprüche, wobei die Bildmerkmale Intensitätswerte, Gradientengröße und/oder - ausrichtung, lokale Bildkrümmung und lokale statistische Bildparameter umfassen.

4. Verfahren nach einem der vorhergehenden Ansprüche, wobei die Hilfsaufgabe umfasst, Intensitätswerte der Bilder als medizinischen Trainingsdatensatz und insbesondere Brustdichtewerte für digitale Brusttomosynthese-Bilder automatisch abzuleiten.

5. Verfahren nach einem der vorhergehenden Ansprüche, wobei der Kompromiss zwischen der Lösung der Hauptaufgabe und der Hilfsaufgabe durch die Änderung der Parameterwerte einer Zielfunktion mit mehreren Aufgaben abstimmbar ist, wobei die Zielfunktion mit mehreren Aufgaben eine Linearkombination von aufgabenspezifischen Termen ist, und wobei die Parameter der Zielfunktion mit mehreren Aufgaben die Gewichtungen der Linearkombination sind.

6. System (500) zum maschinellen Sehen und insbesondere zum Analysieren eines medizinischen Bildes, umfassend:
- eine Verarbeitungseinheit (51) zum Trainieren und Testen eines neuronalen Netzwerks, das ein tiefes neuronales Netzwerk mit mehreren Aufgaben ist,
- einen Speicher (52) zum Speichern eines zu analysierenden Bildes und zum Speichern vorbestimmter Bildmerkmale, die aus dem Bild abgeleitet werden,
- ein Definitionsmodul (53), das dazu ausgelegt ist, Folgendes zu definieren:
- einer Hauptaufgabe für das Analysieren von Bildern, und
- einer Hilfsaufgabe zur Rekonstruktion der Bildmerkmale,
wobei das System (500) dazu ausgelegt ist, das Netzwerks durch gleichzeitiges Lernen des tiefen neuronalen Netzwerks mit mehreren Aufgaben mittels Haupt- und Hilfsaufgaben auf überwachte Weise zu trainieren, wobei das Netzwerk mit einem medizinischen Trainingsdatensatz mit einem Satz von Bildern mit Annotationen trainiert wird, um die optimalen Netzwerkgewichtungen und Parameter gemäß einer Zielfunktion durch Anwendung von Rückwärtsverbreitung und stochastischem Gradientenabstieg zu ermitteln, wobei die Hilfsaufgabe als Regularisierung des Netzwerks während einer Trainingsphase fungiert, indem eine Zielfunktion mit mehreren Aufgaben verwendet wird, die eine Linearkombination aufgabenspezifischer Terme ist, und
wobei das System (500) dazu ausgelegt ist, eine Vorhersage mehrerer Aufgaben durchzuführen, wobei dem trainierten Netzwerk das Bild als Eingabe bereitgestellt wird und wobei das Netzwerk zum Vorhersagezeitpunkt eine Ausgabe bereitstellt, wobei die letzte Schicht des trainierten Netzwerks eine Hybridschicht ist, die sowohl die Hauptaufgabe als auch die Hilfsaufgabe adressiert,
wobei die Ausgabe umfasst: (i) eine Schätzung der Klassenmarkierungen gemäß der Hauptaufgabe, und (ii) rekonstruierte Bildmerkmale, die automatisch von dem Bild nach der Projektion auf seine niedrigdimensionale Darstellung berechnet werden können und zur automatischen Ableitung einer Konfidenzschätzung verwendet werden,
wobei die Konfidenz geschätzt wird, indem die rekonstruierten Bildmerkmale, die vom Netzwerk rekonstruiert wurden, mit den vorgegebenen Bildmerkmalen verglichen werden.

7. System (500) nach dem unmittelbar vorhergehenden Systemanspruch, wobei das System umfasst:
- einen Trainingsspeicher zum Speichern eines medizinischen Trainingsdatensatzes mit einem Satz von Bildern mit Annotationen zum Trainieren und Testen des Netzwerks.

8. Computerprogrammprodukt, das Anweisungen umfasst, die bei Ausführung des Programms durch einen Computer den Computer veranlassen, das Verfahren nach einem der Ansprüche 1 bis 5 auszuführen.

## Revendications

1. Procédé de vision par ordinateur et notamment d'analyse d'une image médicale, comprenant les stades dans lesquels :
- on se procure (61) un réseau, qui est un réseau neuronal profond multitâche
- on se procure (62) l'image à analyser
- on détermine (63) à l'avance des caractéristiques déduits de l'image
- on définit (64)
- une tâche principale pour l'analyse d'image et
- une tâche auxiliaire pour la reconstruction des caractéristiques de l'image
- on fait subir un apprentissage au réseau en enseignant simultanément au réseau neuronal profond multitâche les tâches principale et auxiliaire d'une manière supervisée, dans lequel on fait subir au réseau un apprentissage par un ensemble de données d'apprentissage médical ayant un ensemble d'images avec des annotations pour trouver les pondérations et les paramètres optimaux du réseau suivant une fonction objective en appliquant une rétropropagation et une descente de gradient stochastique, dans lequel la tâche auxiliaire agit en régularisation du réseau en utilisant une fonction objective multitâche, qui est une combinaison linéaire de termes spécifiques à la tâche, et
- on effectue une prévision multi-tâches, dans lequel le réseau ayant subi un apprentissage reçoit l'image en entrée et dans lequel le réseau donne une sortie au moment de la prévision, dans lequel la dernière couche du réseau ayant subi un apprentissage est une couche hybride conçue pour traiter à la fois la tâche principale et la tâche auxiliaire,
la sortie comportant : (i) une estimation des étiquettes de classe suivant la tâche principale, et (ii) des caractéristiques d'image reconstruites qui peuvent être calculées automatiquement à partir de l'image après projection sur sa représentation à petite dimension et qui sont utilisées pour déduire automatiquement une estimation de fiabilité,
dans lequel on estime la fiabilité en comparant les caractéristiques de l'image reconstruite, qui ont été reconstruites par le réseau, aux caractéristiques de l'image déterminées à l'avance.

2. Procédé suivant la revendication 1, dans lequel la tâche principale est une tâche de mise en classes ou de régression.

3. Procédé suivant l'une quelconque des revendications précédentes, dans lequel les caractéristiques de l'image comprennent des valeurs d'intensité, d'amplitude et/ou d'orientation du gradient, de courbure locale de l'image, et des paramètres statistiques locaux de l'image.

4. Procédé suivant l'une quelconque des revendications précédentes, dans lequel la tâche auxiliaire comprend la déduction automatique des valeurs d'intensité des images en tant qu'ensemble de données d'apprentissage médicale et notamment des valeurs de densité mammaire pour les images de tomosynthèse mammaire numériques.

5. Procédé suivant l'une quelconque des revendications précédentes, dans lequel on peut résoudre le compromis entre la résolution de la tâche principale et de la tâche auxiliaire en modifiant les valeurs des paramètres d'une fonction objective multi-tâches, dans lequel la fonction objective multi-tâches est une combinaison linéaire de termes spécifiques à chaque tâche, et dans lequel les paramètres de la fonction objective multi-tâches sont les pondérations de la combinaison linéaire.

6. Système (500) de vision par ordinateur et notamment d'analyse d'une image médicale, comportant :
- une unité (51) de traitement pour faire subir l'apprentissage et tester un réseau neuronal, qui est un réseau neuronal profond multitâche
- une mémoire (52) pour mettre en mémoire une image à analyser et mettre en mémoire des caractéristiques d'image déterminées à l'avance, qui sont déduites de l'image
- un module (53) de définition, qui est propre à définir
- une tâche principale pour l'analyse d'image et
- une tâche auxiliaire pour la reconstruction des caractéristiques de l'image.
dans lequel le système (500) est configuré pour faire subir un apprentissage au réseau en enseignant simultanément au réseau neuronal profond multitâche les tâches principale et auxiliaire d'une manière supervisée, dans lequel on fait subir au réseau un apprentissage par un ensemble de données d'apprentissage médical ayant un ensemble d'images avec des annotations pour trouver les pondérations et les paramètres optimaux du réseau suivant une fonction objective en appliquant une rétropropagation et une descente de gradient stochastique, dans lequel la tâche auxiliaire agit en régularisation du réseau en utilisant une fonction objective multitâche, qui est une combinaison linéaire de termes spécifiques à la tâche, et
dans lequel le système (500) est configurée pour effectuer une prévision multi-tâches, dans lequel le réseau ayant subi un apprentissage reçoit l'image en entrée et dans lequel le réseau donne une sortie au moment de la prévision, dans lequel la dernière couche du réseau ayant subi un apprentissage est une couche hybride conçue pour traiter à la fois la tâche principale et la tâche auxiliaire,
la sortie comportant : (i) une estimation des étiquettes de classe suivant la tâche principale, et (ii) des caractéristiques d'image reconstruites qui peuvent être calculées automatiquement à partir de l'image après projection sur sa représentation à petite dimension et qui sont utilisées pour déduire automatiquement une estimation de fiabilité,
dans lequel on estime la fiabilité en comparant les caractéristiques de l'image reconstruite, qui ont été reconstruites par le réseau, aux caractéristiques de l'image déterminées à l'avance.

7. Système (500) suivant la revendication de système directement précédente, dans lequel le système comporte :
- une mémoire d'apprentissage pour mettre en mémoire un ensemble de données d'apprentissage médical par un ensemble d'images ayant des annotations pour l'apprentissage et le test du réseau.

8. Produit de programme d'ordinateur comportant des instructions qui, lorsque le programme est exécuté par un ordinateur, font que l'ordinateur exécute le procédé suivant l'une des revendications 1 à 5.
